# EUROPEAN PATENT APPLICATION

(11) **EP 4 439 544 A1**
(43) Date of publication of application: **02.10.2024**
(21) Application number: 24167173.4
(22) Date of filing: 28.03.2024
(51) Int. Cl.: G09G 5/00

(54) **DISPLAY DRIVING APPARATUS, DATA TRANSMITTING METHOD, AND IMAGE DATA INSPECTION METHOD**

(30) Priority: 28.03.2023 KR 20230040317
(71) Applicant: LX Semicon Co., Ltd., Daejeon 34027 (KR)
(72) Inventor: KWAK, Bong Sin, 34027 Daejeon (KR); KIM, Man Jung, 34027 Daejeon (KR); KIM, Myung Yu, 34027 Man Jung (KR); YOON, Kwang Hee, 34027 Daejeon (KR); JEONG, Seok Jin, 34027 Daejeon (KR)
(74) Representative: Goddar, Heinz J.

(57) **Abstract**

A display driving device, a data transmission method, and an image data inspection method are disclosed. According to at least one of various embodiments, a method of inspecting image data in a display driving device can include receiving data for one frame including image data and first cyclic redundancy check (CRC) data for the image data from a display processing device; generating second CRC data for the image data of the frame; and controlling to display an occurrence of an error through a display screen when it is determined that the error has occurred in the image data of the frame based on a comparison result of the first CRC data and the second CRC data.

## Description

### [Technical field]

The present disclosure relates to a display driving device, a data transmission method, and an image data inspection method.

### [Background]

A display panel is composed of a number of pixels arranged in a matrix, and each pixel may be composed of sub-pixels such as R(red), G(green), and B(blue). Each sub-pixel displays an image on the display panel while emitting light in a grayscale corresponding to video data (or image data).

Image data is transmitted from a host (e.g., graphic processing unit (GPU)) to a timing controller. Additionally, image data is transmitted from the timing controller to a source driver. In this case, for convenience, the device transmitting image data is referred to as a `display processing device', and the device receiving image data is referred to as a `display driving device'. For example, image data is transmitted as a digital value, and the source driver converts the image data transmitted as the digital value into an analog voltage to drive each subpixel.

Meanwhile, as display devices become larger and have higher resolution, high performance is also required for interfaces to transmit signals between a video source (e.g., the host) and the display device. In response to such demands, Vx1 is being applied to TVs, and a display port (hereinafter, referred to as 'DP') is being applied to IT products such as laptops. The DP interface is an interface established by Video Electronics Standards Association (VESA) and connected as one by integrating an existing internal interface standard, Low Voltage Differential Signaling (LVDS), and an external connection standard, Digital Visual Interface (DVI). The DP interface is a technology that can digitally connect not only internal connections between chips, but also external connections between products. By combining the two interfaces into one, the data bandwidth can be expanded to support higher color depth and resolution. As an example, the DP interface has a bandwidth of up to 10.8 Gbps, which is more than twice that of existing DVI (up to 4.95Gbps), and supports multiple streams with Micro-Packet architecture, allowing up to max six 1080i streams (three 1080p) with a single connector to be transmitted simultaneously. The VESA released a new version of an embedded DP (hereinafter, referred to as 'eDP') standard. The eDP standard is an interface standard corresponding to the DP interface designed for devices with built-in display devices such as laptops, tablets, netbooks, and all-in-one desktop PCs.

On the other hand, a display applied to a vehicle (i.e., a vehicle display) may display maps, gear status, turn signal status, vehicle status, etc. Additionally, the vehicle display may display values obtained from various sensors of the vehicle. For example, the vehicle display may display the front/rear/side vehicle location, the location of pedestrians, the location of obstacles, etc. As such, content displayed on the vehicle display may include content that has a fatal impact on the safety of the vehicle. Therefore, if the driver perceives a condition of the vehicle or its surroundings based on incorrect content displayed on the vehicle display, a vehicle accident may occur.

Accordingly, there is a need for a method that can inspect (or check) for errors in the information displayed on the vehicle display and prevent risks based on the inspection results.

### [Detailed Description of the Invention]

### [Technical problem]

A technical object of the present disclosure is to provide a display driving device, a data transmission method, and an image data inspection method that can check errors in data in important areas among information displayed on a display (e.g., a display for a vehicle).

Another technical object of the present disclosure is to provide a display driving device, a data transmission method, and an image data inspection method that can check for errors in data in important regions among information displayed on a display (e.g., a display for a vehicle) and prevent risks according to the results of the inspection.

### [Technical Solution]

To solve the technical object, in an embodiment of the present disclosure, a method of inspecting image data in a display driving device can include receiving data for one frame including image data and first cyclic redundancy check (CRC) data for the image data from a display processing device; generating second CRC data for the image data of the frame; and controlling to display an occurrence of an error through a display screen when it is determined that the error has occurred in the image data of the frame based on a comparison result of the first CRC data and the second CRC data.

In another embodiment of the present disclosure, a method of transmitting data in a display processing device can include generating cyclic redundancy check (CRC) data for image data included in one frame; transmitting the image data and the generated CRC data to a display driving device; receiving a retransmission request for the image data from the display driving device; and in response to receiving the retransmission request, retransmitting all or part of the image data to the display driving device.

In the other embodiment of the present disclosure, a display driving device can include a frame data receiver configured to receive data for one frame including image data and first cyclic redundancy check (CRC) data for the image data from a display processing device; a CRC generator configured to generate second CRC data for the image data of the frame; and a CRC checker configured to control an occurrence of an error to be displayed through a display screen, when it is determined that the error occurred in the image data of the frame, based on a comparison result of the first CRC data and the second CRC data.

### [Effects of the invention]

As described above, according to this embodiment, errors in data in important regions among information displayed on a display (e.g., a vehicle display) can be inspected or checked.

Additionally, it is possible to prevent danger by inspecting or checking for errors in data in important regions among the information displayed on a display (e.g., a vehicle display) and notifying an occurrence of an error or re-transmitting image data according to the inspection results.

### [Brief description of the drawings]

Figure 1 is a configuration diagram of a display device according to an embodiment.
Figure 2 is a configuration diagram of a data communication system according to an embodiment.
Figure 3 is a configuration diagram of a data communication system according to an embodiment.
Figure 4 is a configuration diagram of a display device according to an embodiment.
Figure 5 is a diagram illustrating a structure of frame data according to one embodiment.
FIG. 6A is a diagram illustrating a structure of frame data according to another embodiment.
FIG. 6B is a diagram illustrating a structure of frame data according to the other embodiment.
FIG. 7 is a diagram illustrating an image displayed on a vehicle display according to an embodiment.
Figure 8 is a diagram illustrating the configuration of a display system according to one embodiment.
Figure 9 is a circuit diagram of a data transmission device according to an embodiment.
Figure 10 is a circuit diagram of a data reception device according to an embodiment.
Figure 11 is a circuit diagram of an image data inspection method according to an embodiment.
Figure 12 is a flowchart of a data transmission method according to one embodiment.

### [Detailed description]

Hereinafter, some embodiments of the present invention will be described in detail through illustrative drawings.

When adding reference numerals to components in each drawing, it should be noted that identical components are given the same reference numerals as much as possible even if they are shown in different drawings. Additionally, in describing the present invention, if it is determined that a detailed description of a related known configuration or function may obscure the gist of the present invention, the detailed description will be omitted.

Additionally, when describing the components of the present invention, terms such as first, second, A, B, (a), and (b) may be used. These terms are only used to distinguish the component from other components, and the nature, sequence, or order of the component is not limited by the term. When a component is described as being "connected," "coupled," or "accessed" to another component, that component may be directly connected or connected to that other component, but there is another component between each component. It will be understood that elements may be "connected," "combined," or "accessed."

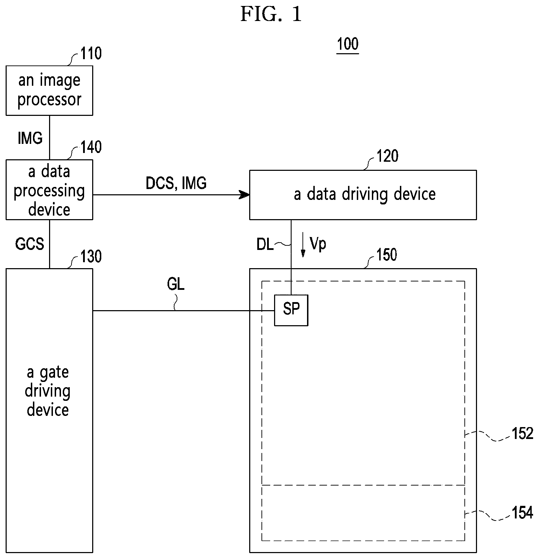

FIG. 1 is a configuration diagram of a display device according to an embodiment.

Referring to FIG. 1, the display device 100 can include a plurality of panel driving devices (or panel driving circuits) 110, 120, 130 and 140 and a display panel 150.

A plurality of data lines (DL) and a plurality of gate lines (GL) can be disposed on the display panel 150, and a plurality of pixels (P) can be disposed on the display panel 150. A pixel (P) can be composed of a plurality of sub-pixels (SP). Here, the sub-pixel (SP) can be R (red), G (green), B (blue), W (white), etc. One pixel (P) can be composed of RGB sub-pixels (SP), RGBG sub-pixels (SP), RGBW sub-pixels (SP), etc. Hereinafter, for convenience of explanation, one pixel (P) will be described as being composed of RGB sub-pixels (SP).

The panel driving devices 110, 120, 130 and 140 are devices that generate signals for displaying images on the display panel 150, and include at least one of an image processing device (or image processing circuit) 110, a data driving device (or a data driving circuit) 120, a gate driving device (or gate driving circuit) 130, and a data processing device (or data processing circuit) 140.

The gate driving device 130 can supply a gate driving signal of turn-on voltage or turn-off voltage to the gate line (GL). When the gate driving signal of the turn-on voltage is supplied to the sub-pixel (SP), the sub-pixel (SP) can be connected to the data line (DL). Also, when the gate driving signal of the turn-off voltage is supplied to the sub-pixel (SP), the connection between the sub-pixel (SP) and the data line (DL) can be disconnected o released. The gate driving device 130 can be referred to as a 'a gate driver.'

The data driving device 120 can supply the data voltage (Vp) to the sub-pixel (SP) through the data line (DL). The data voltage (Vp) supplied to the data line (DL) can be supplied to the sub-pixel (SP) according to the gate driving signal. The data driving device 120 can be referred to as a 'a source driver'.

The data driving device 120 can include at least one integrated circuit, where at least one integrated circuit can be connected to a bonding pad of the display panel 150 as a Tape Automated Bonding (TAB) type or a Chip On Glass (COG) type, formed directly on the display panel 150, or formed integrated into the display panel 150, depending on the embodiment. Additionally, the data driving device 120 can be implemented as a Chip On Film (COF) type.

When the data driving device 120 is formed as the COG type, the integrated circuits consisting of the data driving device 120 can be formed in a peripheral portion 154 of an active area 152 where the sub-pixel (SP) is disposed. To maximize the active area 152 of the display panel 150, the area of the peripheral portion 154 can be narrowed, and a chip size of the integrated circuits consisting of the data driving device 120 can be reduced.

The data processing device 140 can supply control signals to the gate driving device 130 and the data driving device 120. For example, the data processing device 140 can transmit a gate control signal (GCS) to the gate driving device 130 to start scanning. Additionally, the data processing device 140 can output image data (IMG) to the data driving device 120. Moreover, the data processing device 140 can transmit a data control signal (DCS) that controls the data driving device 120 to supply the data voltage (Vp) to each sub-pixel (SP). The data processing device 140 can be referred to as 'a timing controller (T-CON).'

The image processing device 110 can generate image data (IMG) and transmit it to the data processing device 140. The image processing device 110 can be referred to as a 'a host.' For example, the image processing device 110 can include a graphic processing unit (GPU).

The data processing device 140 can include at least one data processing circuit implemented in the form of an integrated circuit, and the data driving device 120 can include at least one data driving circuit implemented in the form of an integrated circuit. A high-speed communication interface is formed between the data processing device 140 and the data driving device 120, and the data processing device 140 can transmit a data control signal (DCS) and/or image data (IMG) to the data driving device 120 through the high-speed communication interface.

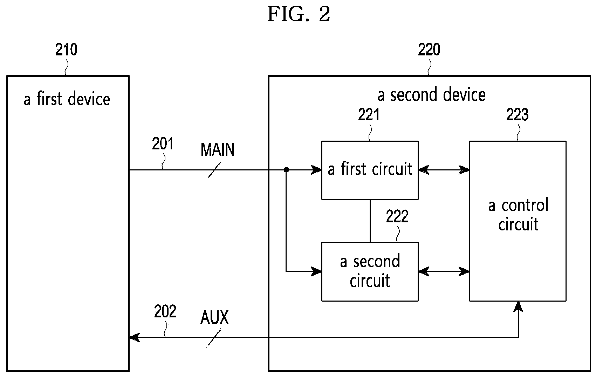

FIG. 2 is a configuration diagram of a data communication system according to an embodiment.

Referring to FIG. 2, a data communication system can include a first device 210 and a second device 220. The first device 210 can transmit data (e.g., image data) to the second device 220 through a main line (MAIN) 201. The first device 210 can be referred to as a 'data transmission device', and the second device 220 can be referred to as a 'data reception device' . The second device 220 can include a first circuit 221, a second circuit 222, and a control circuit 223.

Referring to the above-mentioned FIG. 1 together, since image data is transmitted from the image processing device 110 to the data processing device 140, the data processing device 140 can be corresponded to the second device 220 in case the image processing device 110 can be corresponded to the first device 210. Additionally, since image data is transmitted from the data processing device 140 to the data driving device 120, the data driving device 120 can be corresponded to the second device 220 in case the data processing device 140 can be corresponded to the first device 210.

The first device 210 and the second device 220 can be connected through a plurality of main lines (MAIN) 201 and at least one auxiliary line (AUX) 202. Additionally, not shown in FIG. 2, the first device 210 and the second device 220 can be connected through at least one clock line (CL).

In case being transmitted a signal containing a clock signal through the main line (MAIN) 201, the clock line (CL) can be omitted. For example, when the main line (MAIN) 201 is composed of a differential signal and data including a clock signal are transmitted through the main line (MAIN) 201, the signal including the clock signal can be referred to as a 'clock embedded differential signal (CEDS),' but embodiments described later are not limited to this term.

An auxiliary signal (or control signal) can be transmitted through the auxiliary line (AUX) 202. When the auxiliary signal (or control signal) is transmitted through the main line (MAIN) 201 without a separate auxiliary line (AUX), it can be referred to as 'AUX-less communication,' but embodiments described later are not limited to this term.

The auxiliary signal (or control signal) can be a signal indicating a state of the second device 220 (or the first circuit 221), for example. When the auxiliary signal has a first level voltage, the second device 220 can indicate a state in which data is capable of being received. When the auxiliary signal has a second level voltage, the second device 220 can indicate a state in which it is difficult to receive data. Here, the first level and the second level can be different voltage levels.

The auxiliary signal can be called a lock signal. The Phase Locked Loop (PLL) method can include a process of matching a phase of the clock to the communication signal on a data reception side, and when the phase of the clock is adjusted, the lock signal can be changed. For example, the lock signal can be changed from a low level to a high level, or from a high level to a low level.

In one embodiment, a lock signal can be transmitted to the auxiliary line (AUX) 202. Here, in addition to indicating whether the clock phase is aligned, the lock signal can also indicate other states of the second device 220. For example, when the lock signal is changed from high level to low level, it indicates that the second device 220 is in a state in which it is difficult to receive data, or indicate that a communication signal transmitted to the second device 220 is abnormal.

A clock pattern can be transmitted to the clock line (CL) or main line (MAIN) 201. For example, the clock pattern can indicate bit units of data transmitted through the main line (MAIN) (e.g., ML1, ML2, ..., MLn). The second device 220 can recognize the received data in bit units according to the clock pattern. For example, the second device 220 can receive a clock pattern through the main line (MAIN) 201 and train a communication clock according to the clock pattern. And the second device 220 can receive data transmitted through the main line (MAIN) 201 by the communication clock.

As described above, the clock line (CL) cannot be used. In such case, the clock pattern can be embedded in data transmitted through the main line (MAIN) 201. This clock pattern can be referred to as an 'embedded clock'.

Low voltage and high-frequency communication signals can be transmitted on the main line (MAIN) 201 (or main transmission line). The main line (MAIN) 201 can be a pair of two lines (e.g., a positive line and a negative line), and the paired two lines can transmit communication signals using a differential signal transmission method.

Data (e.g., image data) can be transmitted through the main line (MAIN) 201. And data can include information and patterns. For example, setting data, image data, etc. transmitted through the main line (MAIN) 201 can include information. The setting data can include information about various setting values necessary for an operation of the second device 220, and the image data can include information about the grayscale value of each pixel. The setup data can include a data control signal (see DCS in FIG. 1) described with reference to FIG. 1, and the image data can be image data (see IMG in FIG. 1) described with reference to FIG. 1.

Training data (or link data) transmitted through the main line (MAIN) 201 can be configured to include a set pattern. Here, the pattern can indicate temporal rules of s signal. The first device 210 and the second device 220 can exchange data without being synchronized with each other due to a delay on the main line (MAIN). For data transmission and reception in such asynchronous state, the second device 220 can train a data link through training data and receive setting data or image data according to the trained data link. The training data (or link data) is primarily transmitted and received for training of the data link, but in one embodiment, the training data can be transmitted and received to indicate certain information.

The first circuit 221 of the second device 220 can receive and process data transmitted from the first device 210 through the main line (MAIN) 201 (e.g., a differential signal line). The second circuit 222 of the second device 220 can receive and process a control signal transmitted from the first device 210 through the main line (MAIN) 201. The control signal processed by the second circuit 222 of the second device 220 can include a signal for controlling the first circuit 221. For example, the control signal processed by the second circuit 222 of the second device 220 is a signal for controlling the power supplied to the first circuit 221 (e.g., a signal for blocking or reducing power).

The control circuit 223 can control the power supplied to the first circuit 221 (e.g., block or reduce power) based on the control signal processed through the second circuit 222.

When data (e.g., image data) transmitted from the first device 210 is received by the second device 220, there can be a temporary period or section of stream inactivity in which data is not transmitted.

The control circuit 223 can block or reduce the power supplied to the first circuit 221 to reduce power consumption during a period in which the data is not transmitted. For instance, to reduce power consumption during a period when the data is not transmitted, the power supplied to the first circuit 221 can be blocked or reduced. As an example, a mode for blocking or reducing power supplied to the first circuit 221 can be referred to as a 'low power mode', but various embodiments are not limited to this term.

The first device 210 can transmit a control signal through the main line (MAIN) 201 to control the mode of the first circuit 221 included in the second device 220. The control signal transmitted through the main line (MAIN) 201 can be processed in the second circuit 222 of the second device 220. A signal for switching the mode again to receive data from the first circuit 221 in a state where the supply of the power to the first circuit 221 is limited can be referred to as 'a wake-up signal,' but in various embodiments are not limited to the above terms.

A signal for switching to a low-power mode as a temporary stream inactivity period is entered in a state where power is normally supplied to the first circuit 221 can be referred to as 'a sleep signal,' but various embodiments are not limited to the above term.

Additionally, the function of managing power by controlling the mode of the second device 220 that receives data in such way can be referred to as 'advanced link power management (ALPM),' but various embodiments are not limited to this term.

Although not shown in FIG. 2, an I2C communication line can be further connected between the first device 210 and the second device 220.

The first device 210 and the second device 220 can communicate with each other through a DP interface, an eDP interface, a high-definition multimedia interface (HDMI), and the like.

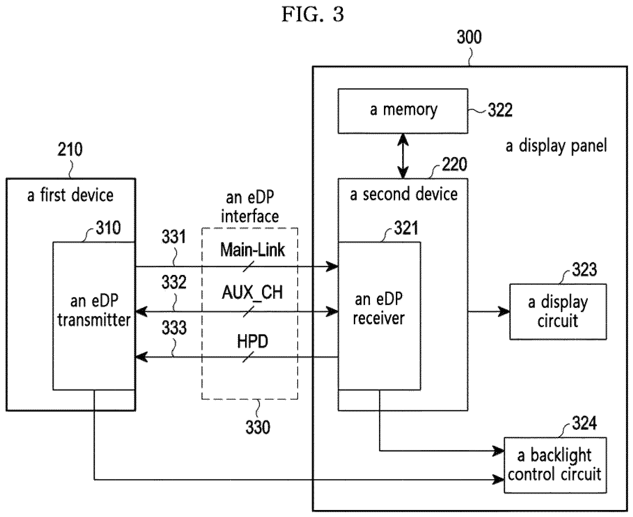

Hereinafter, referring to FIG. 3, an embodiment of communication between the first device 210 and the second device 220 through an eDP interface will be described, but the embodiments described later are not limited thereto.

FIG. 3 is a configuration diagram of a data communication system according to an embodiment.

Referring to FIG. 3, a data communication system can include a first device 210 and a second device 220.

The first device 210 can include an eDP transmitter 310 to communicate with the second device 220 through an eDP interface 330.

The second device 220 can include an eDP receiver 321 to communicate with the first device 210 through an eDP interface 330. In this case, the first device 210 can be referred to as a 'source device', and the second device 220 can be referred to as a 'sink device.' Additionally, the eDP transmitter 310 can be referred to as a 'source device functional unit,' and the eDP receiver 321 can be referred to as a `sink device functional unit.'

The second device 220 can be included in the display panel 300 (or display device). For example, the display panel 300 can include a second device 220, a memory 322, a display circuit 323, and a backlight control circuit 324.

The eDP transmitter 310 included in the first device 210 can be integrated into the GPU as described above. The eDP receiver 321 included in the second device 220 can be integrated into the data processing device 140 (e.g., the timing controller).

The eDP interface 330 can include a main link (Main-Link) 331, an auxiliary line (AUX_CH) 332, and a hot plug detect (HPD) line 333.

The HPD line 333 can be a signal line for the first device 210 to detect an eDP interface connection with the second device 220. For example, when the first device 210 and the second device 220 are connected by the HPD line 333, the first device 210 can detect a connection of the eDP interface 330 with the second device 220 and prepare for communication with the second device 220 using the eDP protocol.

The auxiliary line 332 can transmit and receive various setting information for eDP communication between the first device 210 and the second device 220.

Additionally, the first device 210 can determine whether the second device 220 is capable of communication based on a signal detected through the auxiliary line 332.

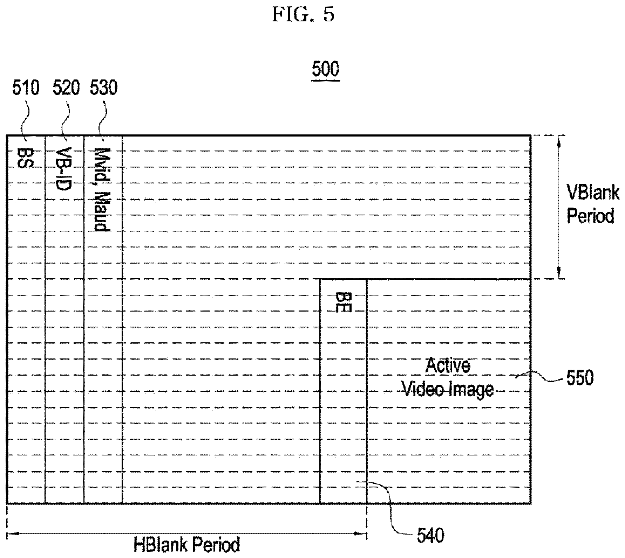

In addition, the eDP transmitter 310 of the first device 210 can transmit mode change information through the auxiliary line 332 so that the main link 331 can operate in a low-power mode. According to one embodiment, the first device 210 can transmit image data through the main link 331, and transmit data defined in the form of a frame as shown in FIG. 5, which will be described later.

The memory 322 included in the display panel 300 can store a display identifier (ID) or extended display ID (EDID) for setting a specific panel.

The first device 210 can use the auxiliary line 332 of the eDP interface 330 to check or confirm the display ID or EDID stored in the memory 322.

The eDP transmitter 310 or the eDP receiver 321 can transmit a backlight control signal to the backlight control circuit 324.

The backlight control circuit 324 can control dimming of the backlight based on a backlight control signal received through the eDP transmitter 310 or the eDP receiver 321.

The second device 220 can receive image data for displaying from the first device 210 through the main link 331 of the eDP interface 330. Image data received from the second device 220 can be transmitted to the display circuit 323.

The display circuit 323 can convert the digital image data received from the second device 220 into an analog signal and then supply it to each pixel (or sub-pixel (SP)).

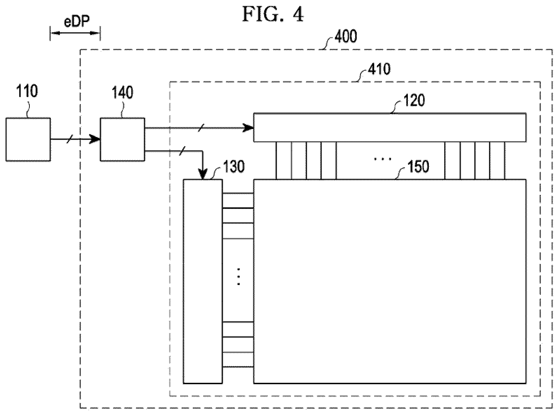

FIG. 4 is a configuration diagram of a display device according to an embodiment.

Referring to FIG. 4, a display device according to an embodiment can include a source (e.g., image processing device 110) and a sink 400.

The source (e.g., the image processing device 110) indicating a system can include an eDP transmitter (e.g., the eDP transmitter 310 in FIG. 3).

The sink 400 indicating a panel unit can include a data processing device 140 (e.g., a timing controller) and a display 410.

As described above, the data processing device 140 can include an eDP receiver (e.g., the eDP receiver 321 in FIG. 3). The source (e.g., image processing device 110) and sink 400 can communicate with each other through an eDP interface (e.g., eDP interface 330 in FIG. 3).

The source (e.g., the image processing device 110) can transmit video data (or image data) to the data processing device 140 included in the sink 400 through the eDP transmitter. The data processing device 140 can receive image data through an eDP receiver and apply the image data to the display 410.

Additionally, the data processing device 140 can generate timing control signals to control the operation timing of the driving circuits (e.g., the data driving device 120, the gate driving device 130, etc.) included in the display 410.

The interface for data transmission between the data processing device 140 and the data driving device 120 can be implemented as a mini LVDS interface, but is not limited to this.

The display 410 can include the display panel 150, the data driving device 120, and the gate driving device 130. Since the detailed configuration of the display 410 is described in FIG. 1, detailed description will be omitted.

FIG. 5 is a diagram illustrating a structure of frame data according to one embodiment.

Referring to FIG. 5, one frame 500 can include at least one of a vertical blank section (VBlank Period), a horizontal blank section (HBlank Period), image data 550 (e.g., active video image data) and the like.

Horizontal lines without image data 550 can be configured of a vertical blank section, and the vertical blank section can transmit blank start data (blank start (BS)) 510 and vertical blank ID (VB-ID) 520, M value of a video and M value of an audio (Mvid/Maud) 530 in an order.

For horizontal lines where image data 550 exists, the image data 550 can be transmitted after the horizontal blank section. The horizontal blank section can transmit in the following order: BS (510), VB-ID (520), Mvid/Maud (530), and blank end data (BE) (540) .

Referring to FIG. 3 together, the eDP transmitter 310 of the first device 210 can sequentially transmit data corresponding to each horizontal line of the frame 500 to the eDP receiver 321 of the second device 220 through the main link 331 of the eDP interface 330.

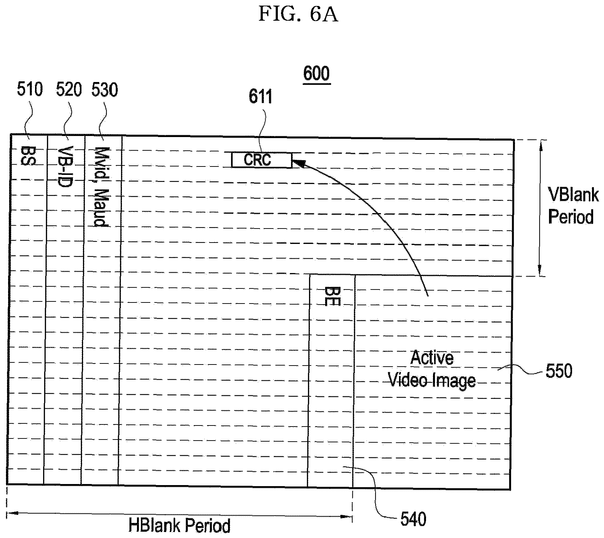

FIG. 6A is a diagram illustrating a structure of frame data according to another embodiment.

Referring to FIG. 6A, one frame 600 can include at least one of a vertical blank section, a horizontal blank section, image data 550 (e.g., active video image data) and the like. The vertical blank section can include CRC data 611.

The CRC data 611 can be transmitted at a set location within the vertical blank section. The set location can be defined in the eDP standard document. For example, the CRC data 611 can be transmitted by being included in a Video Stream Configuration Secondary-Data Packet (VSC SDP) defined in the eDP standard document.

When transmitting the frame 600, horizontal lines corresponding to the vertical blank section can be transmitted first, and then horizontal lines including the horizontal blank section can be transmitted. In this case, a VSC SDP including the CRC data 611 can be transmitted at a set location within the vertical blank section.

Meanwhile, the horizontal blank section can start from BS 510 and end at BE 540 for each horizontal line. After the BE 540 is transmitted, each horizontal line including the horizontal blank section can be sequentially transmitted as each horizontal line of the image data 550.

The CRC data 611 can include CRC data for the entire area of the image data 550 included in the frame 600.

Since the CRC data 611 forms a part of the frame 600, it can be transmitted together when data of the frame 600 is transmitted. For example, the CRC data 611 can be transmitted through the main link 331 of the eDP interface 330 along with the image data 550 when transmitting data of the frame 600.

According to another embodiment, the CRC data 611 can be transmitted through the auxiliary line 332 of the eDP interface 330 along with the image data 550 when transmitting data of the frame 600.

According to the other embodiment, the CRC data 611 can be transmitted through an I2C interface along with the image data 550 when transmitting data of the frame 600.

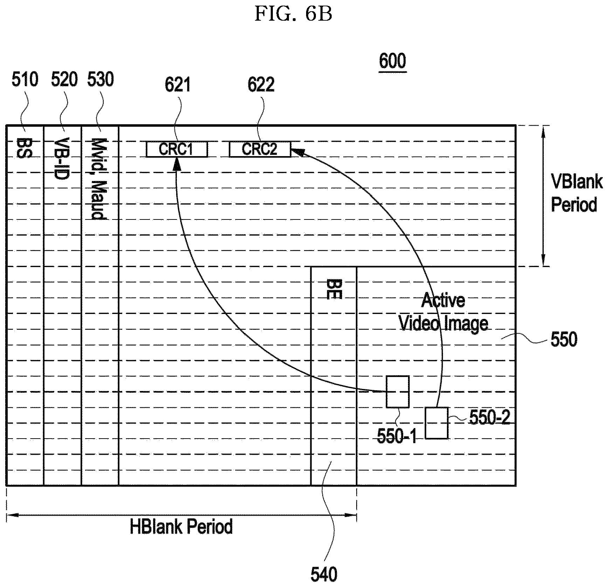

FIG. 6B is a diagram illustrating a structure of frame data according to the other embodiment.

Referring to FIG. 6B, according to one embodiment, one frame 600 includes at least one of a vertical blank section (VBlank Period), a horizontal blank section (HBlank Period), image data 550 (e.g., active video image data), etc. The vertical blank section can include CRC data. The CRC data can include a first CRC data (CRC1) 621 and a second CRC data (CRC2) 622. Although two CRC data are shown in FIG. 6B, one or three or more CRC data can be set within the vertical blank section.

According to one embodiment, the first CRC data 621 and the second CRC data 622 can be transmitted at a set position within the vertical blank section. Here, the set location can be defined in the eDP standard document. For example, the first CRC data 621 and the second CRC data 622 can be transmitted and included in the VSC SDP defined in the eDP standard document.

When transmitting the frame 600, horizontal lines corresponding to the vertical blank section can be transmitted first, and then horizontal lines including the horizontal blank section can be transmitted. At this time, a VSC SDP including the first CRC data 621 and the second CRC data 622 can be transmitted at a set position within the vertical blank section.

Meanwhile, the horizontal blank section can start from BS 510 and end at BE 540 for each horizontal line. After the BE 540 is transmitted, each horizontal line including the horizontal blank section can be sequentially transmitted as each horizontal line of the image data 550.

The first CRC data 621 and the second CRC data 622 can include CRC data corresponding to at least one partial region among the entire region of the image data 550 included in frame 500. For example, the first CRC data 621 can be CRC data corresponding to the first partial region 550-1 among the entire region of the image data 550 included in the frame 500. The second CRC data 622 can be CRC data corresponding to the second partial region 550-2 among the entire region of the image data 550 included in frame 500. Although FIG. 6B illustrates two partial regions 500-1 and 500-2, one partial region or three or more partial regions can be set.

When the image data 550 is displayed on a display installed in a vehicle (i.e., a vehicle display, the first partial region 550-1 or the second partial region 550-2 includes images corresponding to a map, gear status, turn signal status, and vehicle status, and images corresponding to values obtained from various sensors of the vehicle. For example, the first partial region 550-1 or the second partial region 550-2 can include images corresponding to the front/back/side vehicle location, pedestrian location, and obstacle location.

The first CRC data 621 and the second CRC data 622 can include data generated by calculating a CRC operation on the entirety of each partial region 550-1 and 550-2.

According to another embodiment, the first CRC data 621 and the second CRC data 622 include data generated by calculating a CRC operation only for a specific section in which the image data of each partial area 550-1 and 550-2 is divided into a plurality of sections.

According to the other embodiment, the first CRC data 621 and the second CRC data 622 include data generated by calculating a CRC operation only for sub-pixels of a specific color (e.g., R, G or B) in the image data of each partial area 550-1 and 550-2.

Since the first CRC data 621 and the second CRC data 622 form a part of the frame 600, they can be transmitted together when data of the frame 600 is transmitted. For example, the first CRC data 621 and the second CRC data 622 can be transmitted through the main link 331 of the eDP interface 330 along with the image data 550 when transmitting data of the frame 600.

According to another embodiment, the first CRC data 621 and the second CRC data 622 can be transmitted through the auxiliary line 332 of the eDP interface 330 together with the image data 550 when transmitting data of the frame 600.

According to the other embodiment, the first CRC data 621 and the second CRC data 622 can be transmitted through an I2C interface together with the image data 550 when transmitting data of the frame 600.

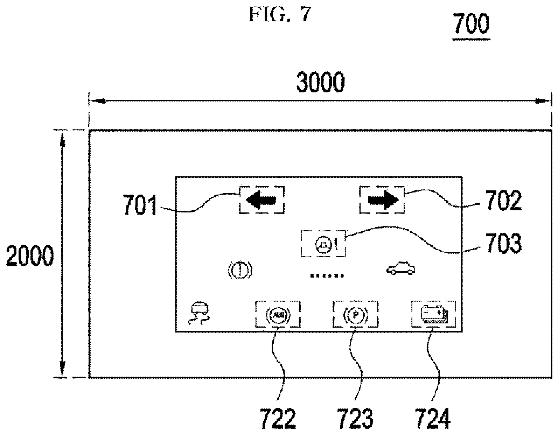

FIG. 7 is a diagram illustrating an image displayed on a vehicle display according to an embodiment.

Referring to FIG. 7, the vehicle display 700 (e.g., instrument panel) can be composed of 3000 pixels horizontally and 2000 pixels vertically, but this is an example to facilitate understanding and is not limited to the above numbers.

According to one embodiment, images displayed on the vehicle display 700 can include images corresponding to maps, gear status, turn signal status, vehicle status, and values obtained from various sensors of the vehicle.

At least one image among the images displayed on the vehicle display 700 can be set as a partial region. For example, as shown in FIG. 7, among the images displayed on the vehicle display 700, a left turn signal lamp is set to the first partial region 701, a right turn signal lamp is set to the second partial region 702, a power steering warning light is set to the third partial region 703, an ABS warning light is set to the 22nd partial region 722, a parking brake light is set to the 23rd partial region 723, and a battery warning light is set to the 24th partial region 724. Although FIG. 7 illustrates that 24 images are set as partial regions, this is only an example and is not limited to the above number.

For instance, the number of settings for the partial region is not limited to a specific number. The first partial region 701 set in FIG. 7 can be corresponded to the first partial region 550-1 in FIG. 6B, and the second partial region 702 can be corresponded to the second partial region 550-2 in FIG. 6B. Any one of the partial regions or the entire display region can be damaged for various reasons. For example, noise can occur on the transmission line between the image processing device and the data processing device, or image data can be damaged due to problems with each device itself. Damage to such image data is important information due to the characteristics of the vehicle display 700 (e.g., instrument panel) and can pose a direct threat to user safety. In the embodiments described later, methods for inspecting (or checking) errors in image data using CRC data and preventing various risks that can occur due to errors in the image data will be described.

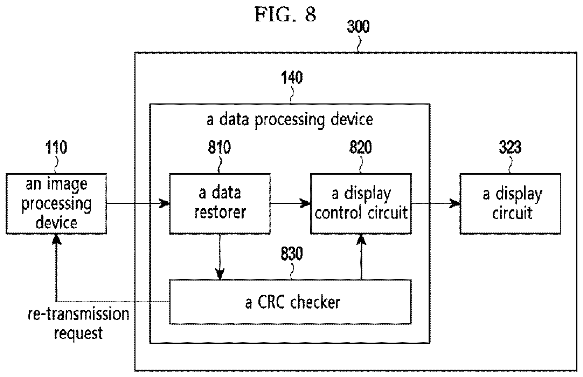

Figure 8 is a diagram illustrating a configuration of a display system according to one embodiment.

Referring to FIG. 8, the display system can include an image processing device 110 and a display panel 300. The display panel 300 can include a data processing device 140 and a display circuit 323.

According to one embodiment, the data processing device 140 can include a data restorer 810, a display control circuit 820, and a CRC checker 830.

According to one embodiment, the image processing device 110 can transmit a frame containing image data (e.g., the frame 500 in FIG. 5, the frame 600 in FIG. 6A or 6B) to the data processing device 140. The frame can include image data 550 as illustrated in FIGS. 5, 6A, and 6B.

According to one embodiment, the data restorer 810 can restore image data 550 included in the frame. The image data 550 can include a grayscale value for each pixel (e.g., sub-pixel).

The display control circuit 820 can perform image quality compensation for image data restored by the data restorer 810.

Additionally, the display control circuit 820 can convert the image data restored by the data restorer 810 into a form that can be driven by the display circuit 323. The display circuit 323 can convert the digital image data processed by the display control circuit 820 into an analog signal and supply it to each pixel (e.g., sub-pixel (SP)).

According to one embodiment, the CRC checker 830 can generate CRC data (hereinafter, referred to as 'target CRC data') for the image data restored by the data restorer 810.

Additionally, the CRC checker 830 can compare the generated target CRC data with CRC data received from the image processing device 110 (hereinafter referred to as 'reference CRC data').

The CRC checker 830 can determine whether there is an error in the image data based on the comparison result. If it is determined that an error has occurred in the image data as a result of the determination, the CRC checker 830 can control the occrrence of the error (i.e., information indicating that an error has occurred) to be displayed on the display screen. For example, if the CRC checker 830 determines that an error has occurred in the image data as a result of the determination, it can control the error occurrence to be displayed on the display screen by notifying the display control circuit 820 of the error occurrence.

The display control circuit 820 can receive notification of an error occurrence from the CRC checker 830 and process the image data so that the error occurrence is displayed on the display screen. For example, the display control circuit 820 can receive notification of an error occurrence from the CRC checker 830 and process the image data to adjust the color or grayscale value of the display screen.

According to another embodiment, the display control circuit 820 can be notified of the occurrence of an error from the CRC checker 830, and can process the image data so that an error message is displayed on the display screen or an image representing the error is displayed.

If it is determined that an error has occurred in the image data as a result of the determination, the CRC checker 830 can request retransmission of the image data to the image processing device 110. When a request for retransmission of the image data is received from the data processing device 140, the image processing device 110 can retransmit the corresponding image data to the data processing device 140.

In this case, the image data retransmitted upon request can be, for example, all of the image data or a portion of the image data corresponding to CRC data in which an error occurred.

According to one embodiment, the CRC checker 830 can generate a target CRC data for at least one partial region (e.g., partial regions 550-1 and 550-2 in FIG. 6B) among the regions of the image data restored by the data restorer 810. For example, at least one partial region can include an image (e.g., 701 to 724 in FIG. 7) corresponding to the state of the vehicle, as described with reference to FIG. 7.

The CRC checker 830 can compare the generated target CRC data with reference CRC data received from the image processing device 110. According to one embodiment, the reference CRC data received from the image processing device 110 is CRC data transmitted through the vertical blank section of the frame (e.g., the first CRC data 621 or the second CRC data 622).

According to another embodiment, the CRC data can be received from the image processing device 110 through an auxiliary link or I2C communication line. The CRC checker 830 can compare target CRC data generated from the partial region with reference CRC data received from the image processing device 110 to determine whether there is an error for each partial region.

If it is determined that an error has occurred as a result of the error determination, the CRC checker 830 can request retransmission of all or part of the image data to the image processing device 110, or control the occurrence of an error to be displayed on the displayed screen by notifying the error occurrence to the display control circuit 820.

The display control circuit 820 can receive notification of an error occurrence from the CRC checker 830 and process the image data so that the error occurrence is displayed on the display screen. For example, the display control circuit 820 can receive notification of an error occurrence from the CRC checker 830 and process the image data so that the color or grayscale value of the display screen (or a partial area of the display screen) is adjusted.

According to another embodiment, the display control circuit 820 can receive notification of an error occurrence from the CRC checker 830 and process the image data so that an error message or an image representing the error is displayed on the display screen.

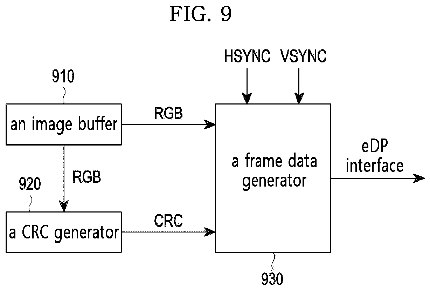

FIG. 9 is a circuit diagram of a data transmission device according to an embodiment.

Referring to FIG. 9, a data transmission device (e.g., a display processing device) can include an image buffer 910, a CRC generator 920, and a frame data generator 930.

The image buffer 910 can store image data (e.g., image data 550 in FIG. 5, FIG. 6A, or FIG. 6B).

The CRC generator 920 can generate CRC data for the image data stored in the image buffer 910 or for at least one partial region set for the image data. The CRC data can be generated through redundancy data and polynomial calculations, and various known CRC calculation methods can be applied. For example, the CRC calculation method can be performed using the original data and calculation using the number of CRC generation bits (n) and Divisor (n+1) obtained through a set polynomial. The operation can be an XOR operation.

The CRC generator 920 can generate CRC data for image data.

The frame data generator 930 can generate frame data by adding the CRC data generated by the CRC generator 920 to the image data stored in the image buffer 910. For example, the frame data generator 930 can generate data corresponding to frame 600 as shown in FIG. 6A or 6B based on the horizontal synchronization signal (HSYNC) and the vertical synchronization signal (VSYNC). Data of the frame 600 generated by the frame data generator 930 can be transmitted through an eDP interface (e.g., main link transmission line) .

As the data of the frame 600 includes the CRC data generated by the CRC generator 920 in the vertical blank section as described above in FIG. 6A or 6B, the CRC data together with the image data 550 (e.g., CRC data 611 in FIG. 6A, or first CRC data 621 and second CRC data 622 in FIG. 6B) can be transmitted.

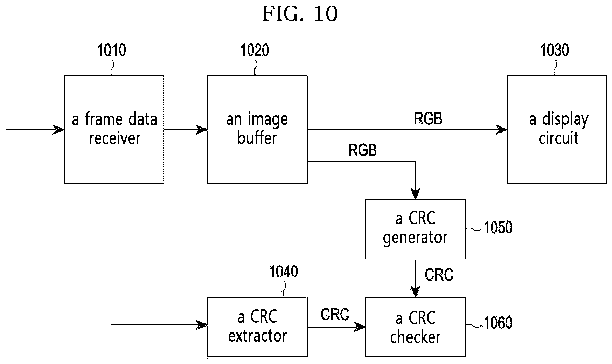

Figure 10 is a circuit diagram of a data reception device according to an embodiment.

Referring to FIG. 10, a data reception device (e.g., a display driving device) according to an embodiment can include a frame data receiver 1010, an image buffer 1020, a display circuit 1030, a CRC extractor 1040, a CRC generator 1050 and a CRC checker 1060.

According to one embodiment, the frame data receiver 1010 can receive frame data transmitted through the eDP interface in FIG. 9.

The image buffer 1020 can extract image data 550 and CRC data 611, 621, and 622 from the frame data constituting the frame 600 and then store them. For example, since the CRC data 611 is transmitted together with the image data 550 in frame data, it can be stored in the image buffer 1020 together with the image data 550. Image data 550 stored in the image buffer 1020 can be transmitted to the display circuit 1030. The display circuit 1030 can convert digital image data 550 into an analog signal and provide the converted image data to each pixel (e.g., sub-pixel (SP)).

According to one embodiment, the CRC extractor 1040 can extract CRC data 611, 621, and 622 among the data stored in the image buffer 1020. For example, the CRC extractor 1040 can extract CRC data 611, 621, and 622 by checking VSC SDP data within the vertical blank section included in the frame.

According to one embodiment, the CRC generator 1050 can generate CRC data from image data stored in the image buffer 1020 or data corresponding to each partial region of the image data.

The CRC checker 1060 can determine whether there is an error in the corresponding partial region by comparing the CRC data 611, 621, and 622 confirmed by the CRC extractor 1040 with the CRC data generated by the CRC generator 1050.

According to one embodiment, as a result of the determination of the CRC checker 1060, if it is determined that an error has occurred in a specific partial region, it can be requested a retransmission for all or part of the image data (e.g., corresponding partial region), or notify whether an error is occurred or not to a user through the display screen.

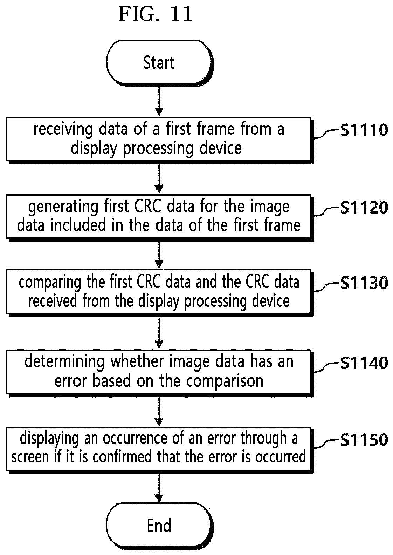

FIG. 11 is a circuit diagram of an image data inspection method according to an embodiment.

Referring to FIG. 11, the data driving device can receive one frame of data from the display processing device (S1110).

According to one embodiment, the data driving device can generate CRC data for the image data included in the frame or a first partial region of the image data region (S1120).

According to one embodiment, the data driving device can compare the generated CRC data with CRC data received from the display processing device (S1130).

The data driving device can determine whether there is an error in the first partial region based on the comparison result (S1140).

If, as a result of the determination, it is determined that an error has occurred in the image data (or the first partial region), the data driving device can display the occurrence of the error on the display screen (S1150). For example, if it is determined that an error has occurred in the image data (or the first partial area), the data driving device can process the image data so that the color or grayscale value of the display screen (or the partial area of the display screen) is adjusted.

According to another embodiment, if it is determined that an error has occurred in the image data (or the first partial region), the data driving device can process the image data so that an error message is displayed or an image indicating the error is displayed on the display screen.

According to the other embodiment, if it is determined that an error has occurred in the image data (or the first partial region) as a result of the determination, the data driving device can request retransmission of all or part of the image data to the data processing device.

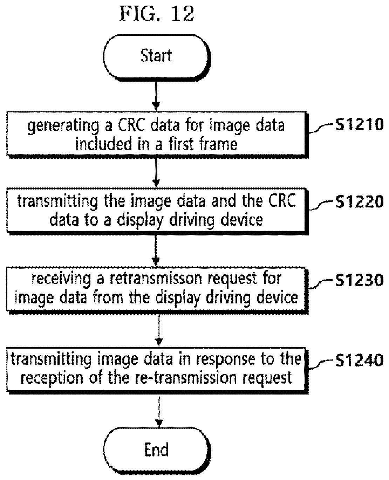

Figure 12 is a flowchart of a data transmission method according to one embodiment.

Referring to FIG. 12, the data processing device can generate CRC data for the image data included in one frame or each partial region among regions of the image data included in the frame (S1210).

The data processing device can transmit the image data and the CRC data to the data driving device (S1220).

The data processing device can receive a retransmission request for all or part of the image data from the data driving device (S1230).

The data processing device can retransmit all or part of the image data in response to a reception of the retransmission request (S1240).

As described above, the presence or absence of errors in data in important areas among the information displayed on the display (e.g., vehicle display) can be inspected, and depending on the results of the inspection, information on error occurrences or all of the image data can be checked. Alternatively, the risk can be prevented through some retransmission.

## Claims

1. A method of inspecting image data in a display driving device, comprising:
receiving data for one frame including image data and first cyclic redundancy check, CRC, data for the image data from a display processing device;
generating second CRC data for the image data of the frame; and
controlling to display an occurrence of an error through a display screen when it is determined that the error has occurred in the image data of the frame based on a comparison result of the first CRC data and the second CRC data.

2. The method of claim 1, wherein the step of controlling to display the occurrence of the error includes controlling a color or gradation value of the display screen to be adjusted.

3. The method of claim 1 or 2, wherein the step of controlling to display the occurrence of the error includes controlling at least one of an image and a message indicating the error to be displayed on the display screen.

4. The method of any of the preceding claims, further comprises requesting retransmission of all or part of the image data to the display processing device when it is confirmed that the error has occurred in the image data of the frame.

5. The method of any of the preceding claims, wherein the step of generating the second CRC data includes generating CRC data for a first partial region among regions of the image data included in the frame.

6. The method of claim 5, wherein the first partial region includes an image corresponding to the state of a vehicle.

7. The method of any of the preceding claims, wherein the first CRC data is received through at least one of an I2C communication line and a main link transmission line connected to the display processing device.

8. The method of claim 9, wherein the first CRC data is received during a horizontal blank section.

9. A display driving device, comprising:
a frame data receiver configured to receive data for one frame including image data and first cyclic redundancy check, CRC, data for the image data from a display processing device;
a CRC generator configured to generate second CRC data for the image data of the frame; and
a CRC checker configured to control an occurrence of an error to be displayed through a display screen, when it is determined that the error occurred in the image data of the frame, based on a comparison result of the first CRC data and the second CRC data.

10. The display driving device of claim 9, wherein the CRC checker is configured to control a color or grayscale value of the display screen to be adjusted.

11. The display driving device of claim 9 or 10, wherein the CRC checker is configured to control at least one of an image indicating the error and a message to be displayed on the display screen.

12. The display driving device of any of claims 9 to 11, wherein, when it is determined that the error has occurred in the image data of the frame, the CRC checker is configured to request a retransmission of all or part of the image data to the display processing device.

13. The display driving device of any of claims 9 to 12, wherein the CRC generator is configured to generate CRC data for a first partial region among regions of the image data included in the frame, and
wherein the first partial region includes an image corresponding to a state of a vehicle.

14. The display driving device of any of claims 9 to 13, wherein the first CRC data is received through at least one of an I2C communication line and a main link transmission line connected to the display processing device.

15. The display driving device of claim 14, wherein the first CRC data is received during a horizontal blank section.
